# EUROPÄISCHE PATENTSCHRIFT

(11) **EP 2 894 816 B1**
(45) Veröffentlichungstag und Bekanntmachung des Hinweises auf die Patenterteilung: **10.04.2019**
(21) Anmeldenummer: 14200390.4
(22) Anmeldetag: 29.12.2014
(51) Int. Cl.: H04L 12/28, H04L 29/08, H04W 12/06, G08C 17/00, H04N 21/41, H04M 1/2755, H04M 1/725, F24C 7/08, F24C 15/20, G08C 17/02

(54) **Verfahren zum Aufbauen einer drahtlosen Kommunikationsverbindung zwischen wenigstens zwei Haushaltsgeräten, sowie entsprechendes System**
Method of establishing a wireless communication connection between at least two household appliances, and corresponding system
Procédé d'établissement d'une liaison de communication sans fil entre au moins deux appareils ménagers, et système correspondant

(30) Priorität: 10.01.2014 DE 102014200298
(43) Veröffentlichungstag der Anmeldung: 15.07.2015
(73) Patentinhaber: BSH Hausgeräte GmbH, 81739 München (DE)
(72) Erfinder: Graw, Martin, 75203 Königsbach-Stein (DE)

(56) Entgegenhaltungen:
- EP-A2- 1 626 532
- US-A1- 2011 081 860
- US-A1- 2013 068 832
- US-A1- 2013 223 279

## Beschreibung

Die Erfindung betrifft ein Verfahren zum Aufbauen einer drahtlosen Kommunikationsverbindung zwischen wenigstens zwei Haushaltsgeräten.

Die US 2013/0068832 A1 offenbart ein Verfahren, bei dem mit einem Smartphone ein auf einem elektronischen Gerät angebrachter QR Code ausgelesen wird, um auf das Smartphone ein Rechnerprogramm vom Internet herunter zu laden. Mittels des Rechnerprogramms kann anschließend das elektronische Gerät mit dem Smartphone angesteuert werden. Das elektronische Gerät ist z.B. ein Haushaltsgerät.

Die EP 1 626 532 A2 offenbart ein drahtloses Netzwerk innerhalb eines Gebäudes. Das drahtlose Netzwerk umfasst mehrere Sensorvorrichtungen, Aktuator-Vorrichtungen und Steuervorrichtungen.

Die US 2011/0081860 A1 offenbart ein Verfahren zum Herstellen einer direkten Bluetooth Verbindung zwischen einem mobilen Endgerät und einem weiteren Gerät. Das weitere Gerät ist eingerichtet, einen QR-Code mittels einer Anzeigevorrichtung anzuzeigen und das mobile Endgerät ist eingerichtet, den QR-Code auszulesen und zu decodieren, um die Bluetooth Verbindung mit dem weiteren Gerät herzustellen.

Die US 2013/0223279 A1 offenbart, mit einem Smartphone oder einem Tablet-Computer einen QR-Code auszulesen, der einem Haushaltsgerät zugeordnet ist, um eine drahtlose Verbindung des Haushaltsgerätes mit einem drahtlosen Zugangspunkt (Englisch: WLAN Access Point), d.h. mit einer Basisstation herzustellen. Das Smartphone bzw. der Tablet-Computer ist dafür bereits mit dem Zugangspunkt verbunden.

Haushaltsgeräte können auch drahtlos miteinander vernetzt sein, um miteinander kommunizieren zu können.

Die Aufgabe der vorliegenden Erfindung ist es, ein für einen Benutzer relativ einfaches Verfahren zum Aufbauen einer sicheren drahtlosen Kommunikationsverbindung zwischen wenigstens zwei Haushaltsgeräten anzugeben.

Die Aufgabe der Erfindung wird gelöst durch ein Verfahren zum Aufbauen einer drahtlosen Verbindung zwischen zwei Haushaltsgeräten, aufweisend folgende Verfahrensschritte:
- mittels eines mobilen Endgerätes, Aufnehmen oder Erkennen eines ersten Bildes von einem ersten optischen Code, welcher einem ersten Haushaltsgerät zugeordnet, insbesondere an dem ersten Haushaltsgerät angeordnet ist und eine dem ersten Haushaltsgerät zugeordnete erste eindeutige Kennung und eine dem ersten Haushaltsgerät zugeordnete Internetadresse, World Wide Web Adresse und/oder Datensatzkennung umfasst,
- mittels des mobilen Endgerätes, Auslesen der ersten eindeutigen Kennung und Auslesen der Internetadresse, World Wide Web Adresse und/oder Datensatzkennung aus einem dem Bild zugeordneten Bilddatensatz,
- automatisches oder menügeführtes Kontaktieren der einer Internetadresse mittels des mobilen Endgerätes, um automatisch ein zum Bedienen zumindest des ersten Haushaltsgerätes vorgesehenes Rechnerprogramm auf das mobile Endgerät zu laden, oder automatisches oder menügeführtes Kontaktieren der World Wide Web Adresse, um auf einer Anzeigevorrichtung des mobilen Endgerätes eine Bedienoberfläche, insbesondere eine Webseite darzustellen, mittels derer das Rechnerprogramm auf das mobile Endgerät herunter ladbar ist, oder automatisches oder menügeführtes Kontaktieren einer der Datensatzkennung zugeordneten Datenbank mittels des mobilen Endgerätes, um das Rechnerprogramm auf das mobile Endgerät zu laden,
- Starten oder Installieren des Rechnerprogramms auf dem mobilen Endgerät oder mittels des mobilen Endgerätes und Aufbauen einer drahtlosen Verbindung zwischen dem mobilen Endgerät und dem ersten Haushaltsgerät aufgrund der ersten Kennung, und
- mittels des mobilen Endgerätes, Einleiten eines Aufbaus einer drahtlosen Verbindung zwischen dem ersten Haushaltsgerät und einem zweiten Haushaltsgerät, sodass die beiden Haushaltsgeräte direkt miteinander drahtlos zu kommunizieren vermögen,
- wobei das erste Haushaltsgeräte als eine Dunstabzugshaube und das zweite Haushaltsgerät als ein Kochhaushaltsgerät ausgebildet ist, so dass das Kochhaushaltsgerät einen Ventilator und/oder eine Beleuchtung der Dunstabzugshaube ein- und ausschalten kann.

Das erfindungsgemäße Verfahren ermöglicht also das Einleiten eines Aufbaus insbesondere eines erstmaligen Aufbaus einer drahtlosen Verbindung zweier Haushaltsgeräte, sodass diese drahtlos kommunizieren können. Insbesondere Haushaltsgeräte mit eingeschränkter Menüführung können somit relativ einfach und Kundenfreundlich angesprochen und verknüpft werden. Mittels der drahtlosen Kommunikation, die vorzugsweise verschlüsselt erfolgt, wird wenigstens eine Funktion des einen Haushaltsgerätes von dem anderen Haushaltsgerät gesteuert. Das erste Haushaltsgerät ist eine Dunstabzugshaube und das zweite Haushaltsgerät ist ein Kochhaushaltsgerät, insbesondere eine Kochmulde, vorzugsweise ein Kochfeld. Mittels des Kochhaushaltsgerätes wird wenigstens eine Funktion der Dunstabzugshaube angesteuert. So kann dann z.B. eine Eingabevorrichtung des Kochhaushaltsgerätes auch zum Bedienen der Dunstabzugshaube verwendet werden. Es ist auch denkbar, dass beim Bedienen des Kochhaushaltsgerätes dieses automatisch die Dunstabzugshaube ansteuert, so dass diese z.B. automatisch eingeschaltet wird. Beispielsweise kann hier die Lüfterstufe, ein bestimmter Betriebsmodus oder auch die Lichtfunktion gemeint sein.

Des Weiteren kann auch eine andere externe Steuerungsquelle diese Aufgaben übernehmen, z.B. Zentrale Lichtsteuerungssysteme, zentrale Hausentlüftungen, externe Steuerungszentralen usw.

Für die drahtlose Kommunikation umfassen die beiden Haushaltsgeräte jeweils eine drahtlose Schnittstelle. Diese sind z.B. Bluetooth Schnittstellen. Vorzugsweise basieren sie auf dem WIFI Standard. Auch das mobile Endgerät umfasst eine derartige drahtlose Schnittstelle, um mit dem ersten Haushaltsgerät drahtlos kommunizieren zu können. Das mobile Endgerät ist vorzugsweise ein Smartphone oder ein Tablet-Computer und ist auch eingerichtet, mit dem Internet bzw. dem World Wide Web insbesondere drahtlos zu kommunizieren.

Erfindungsgemäß ist dem ersten Haushaltsgerät der erste optische Code zugeordnet. Dieser befindet sich z.B. auf einer dem ersten Haushaltsgerät zugeordneten Bedienungsanleitung. Vorzugsweise ist aber das erste Haushaltsgerät mit dem ersten optischen Code versehen, sodass dieser mit dem mobilen Endgerät aufgenommen werden kann. Der erste optische Code ist z.B. ein Strichcode oder vorzugsweise ein sogenannte QR (quick response) Code. Dieser kann z.B. auf einer Oberfläche des ersten Haushaltsgerätes ähnlich einem Typenschild angebracht, insbesondere aufgeklebt oder aufgedruckt sein. Es ist aber auch denkbar, dass der erste optische Code mittels einer Anzeigevorrichtung des ersten Haushaltsgerätes angezeigt wird. Der erste optische Code umfasst die erste eindeutige Kennung und eine Internetadresse bzw. World Wide Web Adresse oder eine andere Datensatzkennung, sodass es dem mobilen Endgerät ermöglicht ist, über das Internet das Rechnerprogramm automatisch herunter zu laden bzw. auf einer Anzeigevorrichtung des mobilen Endgerätes eine der World Wide Web Adresse zugeordnete Webseite darzustellen, sodass eine Person das Rechnerprogramm auf das mobile Endgerät laden kann. Nach dem Installieren oder Starten des Rechnerprogramms, das z.B. als eine APP ausgebildet ist, ist es dem mobilen Endgerät auch basierend auf der ersten eindeutigen Kennung, die z.B. einer MAC Adresse ähnlich ist, möglich, mit zumindest dem ersten Haushaltsgerät drahtlos zu kommunizieren. Das Starten bzw. Installieren des Rechnerprogramms erfolgt vorzugsweise völlig automatisch. Das Rechnerprogramm wird vorzugsweise auf einem Speicher des mobilen Endgerätes gespeichert bzw. gestartet. Die erste eindeutige Kennung ist z.B. ein dem ersten Haushaltsgerät zugeordnetes erstes Kennwort oder umfasst das erste Kennwort. Es kann auch sein, dass aufgrund der Datensatzkennung eine Datenbank z.B. über ein Heimnetzwerk aufgerufen wird.

Nun ist es z.B. möglich, insbesondere menügeführt Aktionen des ersten Haushaltgerätes mittels des mobilen Endgerätes durchzuführen.

Möglicherweise ist das Rechnerprogramm derart ausgeführt, dass, sobald das mobile Endgerät mit diesem konfiguriert ist bzw. es auf diesem gestartet ist und mit dem ersten Haushaltsgerät kommuniziert, der Aufbau der drahtlosen Kommunikation bzw. der drahtlose Verbindung zwischen dem ersten und dem zweiten Haushaltsgerät mittels des mobilen Endgerätes eingeleitet wird.

Die abhängigen Ansprüche 2 bis 9 definieren entsprechende Ausführungsbeispiele. Ein weiterer Aspekt der Erfindung betrifft ein System, aufweisend
- ein erstes Haushaltsgerät, das eine erste drahtlose Schnittstelle und eine mit der ersten drahtlosen Schnittstelle gekoppelte erste elektronische Steuervorrichtung umfasst, die eingerichtet ist, wenigstens eine Funktion des ersten Haushaltsgerätes anzusteuern,
- ein zweites Haushaltsgerät, das eine zweite drahtlose Schnittstelle und eine mit der zweiten drahtlosen Schnittstelle gekoppelte zweite elektronische Steuervorrichtung umfasst, die eingerichtet ist, wenigstens eine Funktion des zweiten Haushaltsgerätes anzusteuern,
wobei das erste Haushaltsgeräte als eine Dunstabzugshaube und das zweite Haushaltsgerät als ein Kochhaushaltsgerät ausgebildet ist, so dass das Kochhaushaltsgerät einen Ventilator und/ oder eine Beleuchtung der Dunstabzugshaube ein- und ausschalten kann, und
- ein mobiles Endgerät, wobei das mobile Endgerät, das erste Haushaltsgerät und das zweite Haushaltsgerät dafur eingerichtet sind, das erfindungsgemäße Verfahren durchzuführen.

Insbesondere um eine sichere drahtlose Verbindung zwischen dem ersten und dem zweiten Haushaltsgerät zu erhalten, können vorzugsweise zusätzlich folgende Verfahrensschritte durchgeführt werden:
- drahtloses Übermitteln einer Information über das zweiten Haushaltsgerät, insbesondere über eine dem zweiten Haushaltsgerät zugeordnete zweite eindeutige Kennung vom mobilen Endgerät an das erste Haushaltsgerät, und
- Aufbauen der drahtlosen Verbindung zwischen dem ersten Haushaltsgerät und dem zweiten Haushaltsgerätes insbesondere basierend auf der zweiten Kennung.

Die zweite eindeutige Kennung ist z.B. ein dem zweiten Haushaltsgerät zugeordnetes zweites Kennwort. Die zweite eindeutige Kennung kann z.B. in das mobile Endgerät mittels einer Eingabevorrichtung des mobilen Endgerätes eingegeben werden.

Nach einer bevorzugten Ausführungsform des erfindungsgemäßen Verfahrens weist dieses zusätzlich folgende Verfahrensschritte auf:
- mittels des mobilen Endgerätes, Aufnehmen eines zweiten Bildes von einem zweiten optischen Code, welcher dem zweiten Haushaltsgerät zugeordnet, insbesondere am zweiten Haushaltsgerät angeordnet ist und die dem zweiten Haushaltsgerät zugeordnete zweite eindeutige Kennung umfasst, und
- mittels des mobilen Endgerätes, Auslesen der zweiten eindeutigen Kennung.

Der zweite optische Code ist z.B. ein zweiter Strichcode. Dieser befindet sich z.B. auf einer dem ersten Haushaltsgerät zugeordneten Bedienungsanleitung. Vorzugsweise ist der zweite optische Code ein zweiter QR Code. Der zweite optische Code kann z.B. auf einer Oberfläche des zweiten Haushaltsgerätes ähnlich einem Typenschild angebracht, insbesondere aufgeklebt oder aufgedruckt sein. Es ist aber auch denkbar, dass der zweite optische Code mittels einer Anzeigevorrichtung des zweiten Haushaltsgerätes angezeigt wird. Aufgrund des Aufnehmens des zweiten optischen Codes kann in relativ einfacher Weise die zweite eindeutige Kennung dem ersten Haushaltsgerät übermittelt werden. Wahlweise kann auch der Bediener die zweite eindeutige Kennung manuell in der mobile Endgerät eingeben.

Es ist aber auch möglich, dass im Rahmen des Aufbaus der drahtlosen Verbindung zwischen dem ersten Haushaltsgerät und dem zweiten Haushaltsgerät das erste Haushaltsgerät die in Reichweite vom ersten Haushaltsgerät befindlichen Haushaltsgeräte automatisch ermittelt und dem mobilen Endgerät eine Information über die ermittelten Haushaltsgeräte übermittelt. Dann ist es möglich, dass das mobile Endgerät die ermittelten Haushaltsgeräte auf einer Anzeigevorrichtung des mobilen Endgerätes z.B. als Liste angezeigt, sodass das zweite Haushaltsgerät aus den angezeigten Haushaltsgeräten ausgewählt werden kann, mit dem ja das erste Haushaltsgerät kommunizieren soll. Aufgrund des ausgewählten zweiten Haushaltsgerätes kann dann eine Information vom mobilen Endgerät an das erste Haushaltsgerät drahtlos übermittelt werden, dass das zweite Haushaltsgerät ausgewählt wurde, sodass das erste Haushaltsgerät den Aufbau der drahtlosen Verbindung mit dem zweiten Haushaltsgerät beginnt. Gemäß dieser Variante sucht also das erste Haushaltsgerät im Rahmen des Aufbaus der drahtlosen Verbindung potenzielle Haushaltsgeräte, von denen es drahtlos Signale empfangen kann, da diese in Reichweite seiner drahtlosen Schnittstelle sind.

Es ist aber auch möglich, dass während des Aufbaus der drahtlosen Verbindung zwischen dem ersten Haushaltsgerät und dem zweiten Haushaltsgerät am zweiten Haushaltsgerät eine dem erste Haushaltsgerät zugeordnete Kennung, z.B. das erste Kennwort, eingegeben wird, um den drahtlosen Aufbau der Verbindung zwischen dem ersten Haushaltsgerät und dem zweiten Haushaltsgerät zu gestatten. Es ist auch denkbar, dass während des Aufbaus der drahtlosen Verbindung zwischen dem ersten Haushaltsgerät und dem zweiten Haushaltsgerät ein Eingabemittel des zweiten Haushaltsgerätes betätigt wird, woraufhin das zweite Haushaltsgerät insbesondere innerhalb einer vorgegebenen Zeitdauer den drahtlosen Aufbau der Verbindung zwischen dem ersten Haushaltsgerät und dem zweiten Haushaltsgerät gestattet.

Je nach Ausführungsform des erfindungsgemäßen Verfahrens kann somit eine sichere Verbindung durch Eindeutigkeit (Pairing), gegebenenfalls durch Hinterlegung eines WPA Schlüssels zwischen zwei Haushaltsgeräten erfolgen.

Ausführungsbeispiele der Erfindung sind exemplarisch in den beigefügten schematischen Zeichnungen dargestellt. Es zeigen:
- Fig. 1: zwei Haushaltsgeräte und ein mobiles Endgerät, und
- Fig. 2: ein Flussdiagramm, welches einen drahtlosen Verbindungsaufbau zwischen den beiden Haushaltsgeräten veranschaulicht.

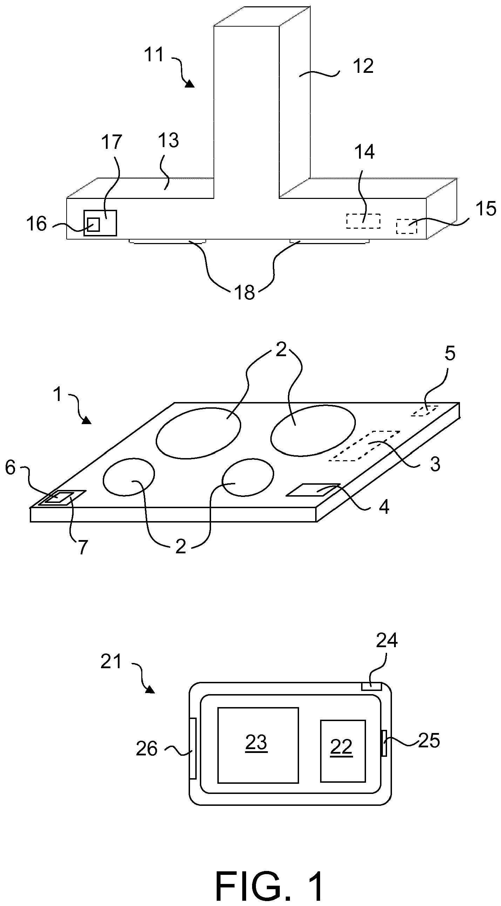

Die Fig. 1 zeigt als Beispiel wenigstens zweier Haushaltsgeräte ein Kochhaushaltsgerät, insbesondere eine Kochmulde bzw. ein Kochfeld 1 und eine über dem Kochfeld 1 angeordnete Dunstabzugshaube 11. Das Kochfeld 1 umfasst im Falle des vorliegenden Ausführungsbeispiels mehrere Kochplatten 2 zum Erwärmen von nicht dargestelltem Kochgeschirr bzw. in dem Kochgeschirr befindlichen Lebensmitteln. Das Kochfeld 1 umfasst ferner eine elektronische Steuervorrichtung 3 und eine mit dieser verbundene Eingabevorrichtung 4, mittels derer eine Person die Temperatur der von den Kochplatten 2 erzeugten Wärme einstellen kann. Die Steuervorrichtung 3 umfasst z.B. eine Elektronik und ist vorgesehen, die Kochplatten 2 anzusteuern.

Im Falle des vorliegenden Ausführungsbeispiels umfasst das Kochfeld 1 eine mit der Steuervorrichtung 3 verbundene drahtlose Schnittstelle 5, mittels der das Kochfeld 1 drahtlos Signale empfangen und senden kann. Die drahtlose Schnittstelle 5 basiert z.B. auf dem WIFI oder dem Bluetooth Standard. Die drahtlose Schnittstelle 5 stellt somit einen drahtlosen Sender und Empfänger dar.

Die Dunstabzugshaube 11 umfasst im Falle des vorliegenden Ausführungsbeispiels einen Abzugskamin 12 und einen unterhalb des Abzugskamins 12 angeordneten Haubenkörper 13. Der Haubenkörper 13 umfasst insbesondere eine nach unten gerichtete Ansaugfläche mit nicht näher dargestellten Ansaugöffnungen. Innerhalb des Haubenkörpers 13 und/oder des Abzugskamins 12 kann wenigstens ein nicht näher gezeigter Ventilator angeordnet sein, der im Betrieb der Dunstabzugshaube 11 beispielsweise mittels einer elektronischen Steuervorrichtung 14 der Dunstabzugshaube 1 angesteuert wird. Die Dunstabzugshaube 11 kann auch eine mittels ihrer Steuervorrichtung 14 ansteuerbare Beleuchtung 18 zum Beleuchtung des Kochfeldes 11 aufweisen. Die Steuervorrichtung 14, welche z.B. eine Elektronik umfasst, ist z.B. innerhalb des Haubenkörpers 13 oder des Abzugskamins 12 angeordnet.

Im Falle des vorliegenden Ausführungsbeispiels weist die Dunstabzugshaube 11 eine mit ihrer Steuervorrichtung 14 verbundene drahtlose Schnittstelle 15 auf, mittels der die Dunstabzugshaube 11 drahtlos Signale empfangen und senden kann. Die drahtlose Schnittstelle 15 basiert z.B. auf dem WIFI oder dem Bluetooth Standard. Die drahtlose Schnittstelle 15 der Dunstabzugshaube 11 stellt somit einen drahtlosen Sender und Empfänger dar.

Im Falle des vorliegenden Ausführungsbeispiels ist es vorgesehen, dass im Betrieb des Kochfeldes 1 und der Dunstabzugshaube 11 diese direkt miteinander über ihre drahtlosen Schnittstellen 5, 15 kommunizieren können. Über diese Kommunikation ist es z.B. vorgesehen, dass das Kochfeld 1, gesteuert durch seine Steuervorrichtung 3, wenigstens eine Funktion der Dunstabzugshaube 11 ansteuert. So kann es z.B. vorgesehen sein, dass über das Kochfeld 1 die Dunstabzugshaube 11, insbesondere deren Ventilator und/oder deren Beleuchtung 18, ein und ausgeschaltet werden kann. Auch ein automatisches Ansteuern der Dunstabzugshaube 11 mittels des Kochfeldes 1 über die beiden drahtlosen Schnittstellen 5, 15 ist denkbar, sodass z.B. beim Einschalten wenigstens einer der Kochplatten 2 das Kochfeld 1 automatisch über seine drahtlose Schnittstelle 5 einen Befehl an die Dunstabzugshaube 11 sendet, den diese mittels ihrer drahtlosen Schnittstelle 15 empfängt. Aufgrund des empfangenen Befehls, den die Steuervorrichtung 14 der Dunstabzugshaube 11 verarbeitet, kann daraufhin z.B. die Beleuchtung 18 der Dunstabzugshaube 11 automatisch einschalten.

Die Fig. 1 zeigt außerdem ein mobiles Endgerät 21. Das mobile Endgerät 21 umfasst eine Rechenvorrichtung 22 z.B. in Form eines Mikroprozessors und ist beispielsweise ein tragbares Telefon, insbesondere ein sogenanntes Smartphone, oder ein tragbarer Computer, insbesondere ein Tablet-Computer. Das mobile Endgerät 21 ist mit einem Betriebssystem konfiguriert, wie dies dem Fachmann im Prinzip bekannt ist. Das Betriebssystem ist insbesondere ein für Smartphones oder Tablet-Computer übliches Betriebssystem.

Das mobile Endgerät 21 umfasst eine Anzeigevorrichtung vorzugsweise in Form eines Tastschirms bzw. Berührungsbildschirms, die üblicherweise als Touchscreen 23 bezeichnet wird. Der Touchscreen 23 ist mit der Rechenvorrichtung 22 in allgemein bekannter Weise verbunden, sodass dieser, gesteuert durch die Rechenvorrichtung 22, Bildinhalte anzuzeigen vermag. Der Touchscreen 23 kann auch durch Berühren als Eingabemittel verwendet werden, wie dies dem Fachmann im Allgemeinen bekannt ist.

Das mobile Endgerät 21 umfasst ferner eine drahtlose Schnittstelle 24, die mit der Rechenvorrichtung 22 verbunden ist und insbesondere auf dem WIFI oder dem Bluetooth Standard basiert. Die drahtlose Schnittstelle 24 des mobilen Endgerätes 21 stellt somit einen drahtlosen Sender und Empfänger dar. Mittel seiner drahtlosen Schnittstelle 24 kann ist es dem mobilen Endgerät 21 möglich, mit der Dunstabzugshaube 11 und/oder mit dem Kochfeld 1 zu kommunizieren.

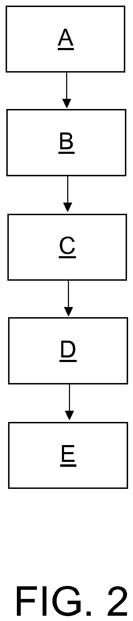

Im Falle des vorliegenden Ausführungsbeispiels ist es vorgesehen, dass mittels des mobilen Endgerätes 21 ein Verbindungsaufbau für die drahtlose Kommunikation zwischen der Dunstabzugshaube 11 und dem Kochfeld 1 eingeleitet werden kann. Dies ist in einem in der Fig. 2 gezeigten Flussdiagramm zusammen gefasst.

Im Falle des vorliegenden Ausführungsbeispiels ist die Dunstabzugshaube 11 mit einem optisch lesbaren Code 16 versehen. Der Code 16 ist z.B. ein Strichcode oder vorzugsweise ein so genannter QR (quick response) Code. Der Code 16 ist insbesondere auf einer Oberfläche der Dunstabzugshaube 11 angebracht, welche für eine Person relativ leicht zugänglich ist, auch wenn die Dunstabzugshaube 11 in einer Küche verbaut ist. Es ist aber auch denkbar, dass die Dunstabzugshaube 11 eine Anzeigevorrichtung 17 aufweist, mittels der der Code 16 angezeigt werden kann.

Im Falle des vorliegenden Ausführungsbeispiels umfasst der Code 16 eine der Dunstabzugshaube 11 zugeordnete eindeutige Kennung zur eindeutigen Identifizierung der Dunstabzugshaube 11. Diese eindeutige Kennung umfasst z.B. ein Kennwort der Dunstabzugshaube 11. Außerdem ist es vorgesehen, dass der Code 16 z.B. mit dem mobilen Endgerät 21 gelesen und ausgewertet wird. Dazu umfasst im Falle des vorliegenden Ausführungsbeispiels das mobile Endgerät 21 eine geeignete Scannervorrichtung insbesondere in Form einer digitalen Kamera 25.

Für den Verbindungsaufbau wird nun im Falle des vorliegenden Ausführungsbeispiels mit dem mobile Endgerät 21 ein Bild vom Code 16 der Dunstabzugshaube 11 aufgenommen, Schritt A des Flussdiagramms. Die digitale Kamera 25 ist ferner mit der Rechenvorrichtung 22 des mobilen Endgerätes 21 verbunden, sodass es dieser ermöglicht wird, mittels eines auf der Rechenvorrichtung 22 laufenden Rechnerprogramms den dem aufgenommenen Bild vom Code 16 zugeordneten Bilddatensatz beispielsweise mittels einer Bilderkennung zu analysieren, um somit die der Dunstabzugshaube 11 zugeordnete Kennung auszulesen, Schritt B des Flussdiagramms. Daraufhin ist es dem mobilen Endgerät 21 ermöglicht, über seine drahtlose Schnittstelle 24 mit der Dunstabzugshaube 11 drahtlos zu kommunizieren, Schritt C des Flussdiagramms.

Im Falle des vorliegenden Ausführungsbeispiels ist im Code 16 ferner eine der Dunstabzugshaube 11 zugeordnete Internetadresse, insbesondere eine IP-Adresse oder eine World Wide Web Adresse (ULR) hinterlegt, welche das mobile Endgerät 21 mittels seiner Rechenvorrichtung 22 aus dem Bilddatensatz decodiert, Schritt D des Flussdiagramms. Im Code 16 kann auch eine andere Datensatzkennung hinterlegt sein, welche das mobile Endgerät 21 decodiert.

Somit ist es dem mobilen Endgerät 21 ermöglicht, über eine weitere drahtlose Schnittstelle 26 eine Kommunikation zu dieser Internetadresse oder World Wide Web Adresse aufzubauen, um vorzugsweise automatisch ein zum Bedienen der Dunstabzugshaube 11 vorgesehenes Rechnerprogramm zu laden, welches daraufhin automatisch auf dem mobilen Endgerät 21 installiert oder gestartet wird, Schritt E des Flussdiagramms. Das Rechnerprogramm ist insbesondere ein APP. Das Rechnerprogramm wird insbesondere auf einem nicht näher gezeigten Speicher des mobilen Endgeräts 21 gespeichert bzw. gestartet. Das Rechnerprogramm ist insbesondere auch der Dunstabzugshaube 11 bzw. deren Kennung zugeordnet. Es kann aber auch vorgesehen sein, dass aufgrund der Internetadresse bzw. der World Wide Web Adresse automatisch eine entsprechende Webseite auf dem Touchscreen 23 des mobilen Endgerätes 21 aufgebaut wird, mittels derer das Rechnerprogramm zum Bedienen der Dunstabzugshaube 11 auf das mobile Endgerät 21 herunter geladen werden kann. Um die Webseite auf dem mobilen Endgerät 21 darstellen zu können, umfasst dieses einen dem Fachmann im Prinzip bekannten Browser. Wahlweise kann aber auch eine anders geartete Bedienoberfläche gestartet werden. Es kann auch sein, dass aufgrund der Datensatzkennung eine Datenbank z.B. über ein Heimnetzwerk aufgerufen wird.

Das eben angesprochene Rechnerprogramm ist insbesondere derart ausgeführt, dass mittels des mobilen Endgerätes 21 eine Person einen drahtlosen Verbindungsaufbau zwischen der Dunstabzugshaube 11 und einem weiteren Haushaltsgerät, insbesondere zwischen der Dunstabzugshaube 11 und dem Kochfeld 1 einzuleiten vermag, sodass die Dunstabzugshaube 11 mit diesem weiteren Haushaltsgerät drahtlos kommunizieren kann. Diese Kommunikation erfolgt vorzugsweise verschlüsselt. Das Einleiten des Verbindungsaufbaus erfolgt insbesondere Menü gesteuert.

Um den Verbindungsaufbau zwischen der Dunstabzugshaube 1 und dem Kochfeld 11 einzuleiten, sendet im Falle des vorliegenden das mobile Endgerät 21 einen entsprechenden Befehl an die Dunstabzughaube 11, woraufhin dieses automatisch beginnt, eine drahtlose Verbindung mit dem Kochfeld 1 aufzubauen, Schritt E des Flussdiagramms. Dies wird bisweilen auch als Pairing bezeichnet und ist nicht nur auf eine Bluetooth Verbindung beschränkt.

Im Rahmen des Verbindungsaufbaus kann es z.B. vorgesehen sein, dass am Kochfeld 1 insbesondere mittels der Eingabevorrichtung 4 ein der Dunstabzugshaube 11 zugeordneter Code eingegeben werden muss, damit das Kochfeld 1 die drahtlose Verbindung mit der Dunstabzugshaube 11 gestattet. Es kann aber auch vorgesehen sein, dass am Kochfeld 1 lediglich ein Eingabemittel, z.B. eine Taste, betätigt oder z.B. eine Eingabekombination mittels der Eingabevorrichtung 4 eingegeben werden muss, woraufhin das Kochfeld 1 vorzugsweise innerhalb einer vorgegebenen Zeitdauer einen Verbindungsaufbau mit der Dunstabzugshaube 1 erlaubt, ähnlich der WIFI Protected Setup (WPS) Methode.

Es kann auch vorgesehen sein, dass am mobilen Endgerät 21 eine dem Kochfeld 1 zugeordnete eindeutige Kennung eingegeben werden muss, welche der Dunstabzugshaube 11 übermittelt wird, sodass es dieser ermöglicht wird, das Kochfeld 1 für den Verbindungsaufbau zu erkennen.

Es kann auch vorgesehen sein, dass die Dunstabzugshaube 11 mögliche Verbindungen zu Haushaltsgeräten automatisch erkennt und diese Information an das mobile Endgerät 21 übermittelt. Diese Information wird am Touschscreen 23 z.B. in Form einer Liste angezeigt, wodurch es einer Person ermöglicht ist, das gewünschte Haushaltsgerät, im Falle des vorliegenden Ausführungsbeispiels also das Kochfeld 1, auszuwählen. Diese Information wird vom mobilen Endgerät 21 an die Dunstabzugshaube 11 übermittelt, woraufhin diese die drahtlose Verbindung mit dem Kochfeld 1 aufbaut.

Im Falle vorliegenden Ausführungsbeispiels kann es auch vorgesehen sein, dass das weitere Haushaltsgerät, im Falle des vorliegenden Ausführungsbeispiels also das Kochfeld 1, ebenfalls mit einem optisch lesbaren Code 6 versehen ist. Dieser Code 6 ist z.B. ein Strichcode oder vorzugsweise ein QR (quick response) Code. Der Code 6 ist insbesondere auf einer Oberfläche des Kochfeldes 1 angebracht, welche für eine Person relativ leicht zugänglich ist, auch wenn das Kochfeld 1 in einer Küche verbaut ist. Es ist aber auch denkbar, dass das Kochfeld 1 eine Anzeigevorrichtung 7 aufweist, mittels der der Code 6 angezeigt werden kann.

Im Falle des vorliegenden Ausführungsbeispiels umfasst der Code 6 des Kochfeldes 1 eine dem Kochfeld 1 zugeordnete eindeutige Kennung zum eindeutigen Identifizieren des Kochfeldes 1. Der Code 6 des Kochfeldes 1 kann ebenfalls mit dem mobilen Endgerät 21 aufgenommen werden, d.h. es kann mit dem mobilen Endgerät 21 ein Bild vom Code 6 des Kochfeldes 1 erstellt werden. Der dem Bild vom Code 6 zugeordnete Bilddatensatz kann ebenfalls mit dem mobilen Endgerät 21 derart mittels Bildverarbeitung analysiert werden, sodass es dem mobilen Endgerät 21 ermöglicht ist, der Dunstabzugshaube 11 eine Information über die eindeutige Kennung des Kochfeldes 1 zu übermitteln. Somit ist der Dunstabzugshaube 1 die eindeutige Kennung des Kochfeldes 1 bekannt und somit ermöglicht, eine eindeutige Verbindung nur mit dem Kochfeld 1 aufzubauen, um nach dem Verbindungsaufbau mit dem Kochfeld 1 drahtlos zu kommunizieren, insbesondere verschlüsselt zu kommunizieren.

### BEZUGSZEICHENLISTE

- 1: Kochfeld
- 2: Kochplatten
- 3: Steuervorrichtung
- 4: Eingabevorrichtung
- 5: drahtlose Schnittstelle
- 6: Code
- 7: Anzeigevorrichtung
- 11: Dunstabzugshaube
- 12: Abzugskamin
- 13: Haubenkörper
- 14: Steuervorrichtung
- 15: drahtlose Schnittstelle
- 16: Code
- 17: Anzeigevorrichtung
- 18: Beleuchtung
- 21: mobiles Endgerät
- 22: Rechenvorrichtung
- 23: Touchscreen
- 24: drahtlose Schnittstelle
- 25: digitale Kamera
- 26: drahtlose Schnittstelle
- A - E: Schritte

## Patentansprüche

1. Verfahren zum Aufbauen einer drahtlosen Verbindung zwischen zwei Haushaltsgeräten (1, 11), aufweisend folgende Verfahrensschritte:
- mittels eines mobilen Endgerätes (21), Aufnehmen oder Erkennen eines ersten Bildes von einem ersten optischen Code (16), welcher einem ersten Haushaltsgerät (11) zugeordnet ist und eine dem ersten Haushaltsgerät (11) zugeordnete erste eindeutige Kennung sowie eine dem ersten Haushaltsgerät (11) zugeordnete Internetadresse, World Wide Web Adresse und/oder Datensatzkennung umfasst,
- mittels des mobilen Endgerätes (21), Auslesen der ersten eindeutigen Kennung und Auslesen der Internetadresse, World Wide Web Adresse oder Datensatzkennung aus einem dem Bild zugeordneten Bilddatensatz,
- automatisches oder menügeführtes Kontaktieren der Internetadresse mittels des mobilen Endgerätes (21), um automatisch ein zum Bedienen zumindest des ersten Haushaltsgerätes (11) vorgesehenes Rechnerprogramm auf das mobile Endgerät (21) zu laden, oder automatisches oder menügeführtes Kontaktieren der World Wide Web Adresse, um auf einer Anzeigevorrichtung (23) des mobilen Endgerätes (21) eine Bedienoberfläche darzustellen, mittels derer das Rechnerprogramm auf das mobile Endgerät (21) herunter ladbar ist, oder automatisches oder menügeführtes Kontaktieren einer der Datensatzkennung zugeordneten Datenbank mittels des mobilen Endgerätes (21), um das Rechnerprogramm auf das mobile Endgerät (21) zu laden,
- Starten oder Installieren des Rechnerprogramms auf dem mobilen Endgerät (21) oder mittels des mobilen Endgerätes und Aufbauen einer drahtlosen Verbindung zwischen dem mobilen Endgerät (21) und dem ersten Haushaltsgerät (21) aufgrund der ersten Kennung, und
- mittels des mobilen Endgerätes (21), Einleiten eines Aufbaus einer drahtlosen Verbindung zwischen dem ersten Haushaltsgerät (11) und einem zweiten Haushaltsgerät (1), sodass die beiden Haushaltsgeräte (1, 11) direkt miteinander drahtlos zu kommunizieren vermögen,
- wobei das erste Haushaltsgerät als eine Dunstabzugshaube (11) und das zweite Haushaltsgerät als ein Kochhaushaltsgerät ausgebildet ist, so dass das Kochhaushaltsgerät einen Ventilator und/oder eine Beleuchtung der Dunstabzugshaube (11) ein- und ausschalten kann.

2. Verfahren nach Anspruch 1, zusätzlich aufweisend folgende Verfahrensschritte:
- drahtloses Übermitteln einer Information über eine dem zweiten Haushaltsgerät (1) zugeordnete zweite eindeutige Kennung vom mobilen Endgerät (21) an das erste Haushaltsgerät (11), und
- Aufbauen der drahtlosen Verbindung zwischen dem ersten Haushaltsgerät (11) und dem zweiten Haushaltsgerät (1) basierend auf der zweiten Kennung.

3. Verfahren nach Anspruch 2, zusätzlich aufweisend folgende Verfahrensschritte:
- mittels des mobilen Endgerätes (21), Aufnehmen eines zweiten Bildes von einem zweiten optischen Code (6), welcher dem zweiten Haushaltsgerät (1) zugeordnet ist und die dem zweiten Haushaltsgerät (1) zugeordnete zweite eindeutige Kennung umfasst, und
- mittels des mobilen Endgerätes (21), Auslesen der zweiten Kennung.

4. Verfahren nach Anspruch 2, bei dem die zweite eindeutige Kennung in das mobile Endgerät (21) mittels einer Eingabevorrichtung (23) des mobilen Endgerätes (21) eingegeben wird.

5. Verfahren nach Anspruch 2, zusätzlich aufweisend folgende Verfahrensschritte:
- im Rahmen des Aufbaus der drahtlosen Verbindung zwischen dem ersten Haushaltsgerätes (11) und dem zweiten Haushaltsgerätes (1) das erste Haushaltsgerät (11), Ermitteln der in Reichweite vom ersten Haushaltsgerät (11) befindlichen Haushaltsgeräte und Übermitteln einer Information über die ermittelten Haushaltsgeräte an das mobile Endgerät (21),
- Anzeigen der ermittelten Haushaltsgeräte auf einer Anzeigevorrichtung (23) des mobilen Endgerätes (21),
- Auswählen des zweiten Haushaltsgerätes (11) aus den angezeigten Haushaltsgeräten, und
- aufgrund des ausgewählten zweiten Haushaltsgerätes (11), Übermitteln einer Information vom mobilen Endgerät (21) an das erste Haushaltsgerät (11), dass das zweite Haushaltsgerät (1) ausgewählt wurde, sodass das erste Haushaltsgerät (11) den Aufbau der drahtlosen Verbindung mit dem zweiten Haushaltsgerät (1) beginnt.

6. Verfahren nach Anspruch 1, bei dem während des Aufbaus der drahtlosen Verbindung zwischen dem ersten Haushaltsgerätes (11) und dem zweiten Haushaltsgerätes (1) am zweiten Haushaltsgerät (1) eine dem erste Haushaltsgerät (11) zugeordnete Kennung eingegeben wird, um den drahtlosen Aufbau der Verbindung zwischen dem ersten Haushaltsgerät (11) und dem zweiten Haushaltsgerät (11) zu gestatten, oder bei dem während des Aufbaus der drahtlosen Verbindung zwischen dem ersten Haushaltsgerätes (11) und dem zweiten Haushaltsgerätes (1) ein Eingabemittel des zweiten Haushaltsgerätes (1) betätigt wird, woraufhin das zweite Haushaltsgerät (1) innerhalb einer vorgegebenen Zeitdauer den drahtlosen Aufbau der Verbindung zwischen dem ersten Haushaltsgerät (11) und dem zweiten Haushaltsgerät (11) gestattet.

7. Verfahren nach einem der Ansprüche 1 bis 6, bei dem der erste optische Code (16) ein QR Code und/oder der zweite optische Code (6) ein QR Code ist.

8. Verfahren nach einem der Ansprüche 1 bis 7, aufweisend Anzeigen des ersten optischen Codes (16) mittels einer Anzeigevorrichtung (17) des ersten Haushaltsgerätes (11) und/oder Anzeigen des zweiten optischen Codes (6) mittels einer Anzeigevorrichtung (7) des zweiten Haushaltsgerätes (1).

9. Verfahren nach einem der Ansprüche 1 bis 8, bei dem das Kochhaushaltsgerät als eine Kochmulde, vorzugsweise als ein Kochfeld (1), ausgebildet ist.

10. System, aufweisend
- ein erstes Haushaltsgerät (11), das eine erste drahtlose Schnittstelle (15) und eine mit der ersten drahtlosen Schnittstelle (15) gekoppelte erste elektronische Steuervorrichtung (14) umfasst, die eingerichtet ist, wenigstens eine Funktion des ersten Haushaltsgerätes (11) anzusteuern,
- ein zweites Haushaltsgerät (1), das eine zweite drahtlose Schnittstelle (5) und eine mit der zweiten drahtlosen Schnittstelle (5) gekoppelte zweite elektronische Steuervorrichtung (4) umfasst, die eingerichtet ist, wenigstens eine Funktion des zweiten Haushaltsgerätes (1) anzusteuern, wobei das erste Haushaltsgerät als eine Dunstabzugshaube (11) und das zweite Haushaltsgerät als ein Kochhaushaltsgerät ausgebildet ist, so dass das Kochhaushaltsgerät einen Ventilator und/oder eine Beleuchtung der Dunstabzugshaube (11) ein- und ausschalten kann, und
- ein mobiles Endgerät (21), wobei das mobile Endgerät (21), das erste Haushaltsgerät (11) und das zweite Haushaltsgerät (1) daran angepasst sind, das Verfahren nach einem der Ansprüche 1 bis 9 durchzuführen.

## Claims

1. Method of establishing a wireless connection between two household appliances (1, 11), having the following method steps:
- by means of a mobile terminal (21), receiving or identifying a first image of a first optical code (16) which is assigned to a first household appliance (11), and a first unique identifier assigned to the first household appliance (11) and an internet address, World Wide Web address and/or data record identifier assigned to the first household appliance (11),
- by means of the mobile terminal (21), reading out the first unique identifier and reading out the internet address, World Wide Web address or data record identifier from an image data record assigned to the image,
- automatic or menu-controlled contacting of the internet address by means of the mobile terminal (21) in order to automatically load a computer program intended to control at least the first household appliance (11) onto the mobile terminal (21), or automatic or menu-controlled contacting of the World Wide Web address in order to represent a user interface on a display device (23) of the mobile terminal (21), by means of which the computer program can be downloaded onto the mobile terminal (21) or automatic or menu-controlled contacting of a database assigned to the data record identifier by means of the mobile terminal (21), in order to load the computer program onto the mobile terminal (21),
- starting or installing the computer program on the mobile terminal (21) or by means of the mobile terminal and establishing a wireless connection between the mobile terminal (21) and the first household appliance (21) on the basis of the first identifier, and
- by means of the mobile terminal (21), initiating an establishment of a wireless connection between the first household appliance (11) and a second household appliance (1), so that the two household appliances (1, 11) are able to communicate wirelessly directly with one another,
- wherein the first household appliance is embodied as an extractor hood (11) and the second household appliance is embodied as a household cooking appliance, so that the household cooking appliance can switch a ventilator and/or a lighting system of the extractor hood (11) on and off.

2. Method according to claim 1, additionally having the following method steps:
- wirelessly transmitting an item of information relating to a second unique identifier assigned to the second household appliance (1) from the mobile terminal (21) to the first household appliance (11), and
- establishing the wireless connection between the first household appliance (11) and the second household appliance (1) on the basis of the second identifier.

3. Method according to claim 2, additionally having the following method steps:
- by means of the mobile terminal (21), receiving a second image of a second optical code (6), which is assigned to the second household appliance (1) and comprises the second unique identifier assigned to the second household appliance (1),
- by means of the mobile terminal (21), reading out the second identifier.

4. Method according to claim 2, in which the second unique identifier is input into the mobile terminal (21) using an input device (23) of the mobile terminal (21).

5. Method according to claim 2, additionally having the following method steps:
- within the scope of establishing the wireless connection between the first household appliance (11) and the second household appliance (1), the first household appliance (11), determining the household appliances disposed in the range from the first household appliance (11) and transmitting an item of information relating to the determined household appliances to the mobile terminal (21),
- displaying the determined household appliances on a display device (23) of the mobile terminal (21),
- selecting the second household appliance (11) from the displayed household appliances, and
- on account of the selected second household appliance (11), transmitting an item of information from the mobile terminal (21) to the first household appliance (11), that the second household appliance (1) has been selected so that the first household appliance (11) begins to establish the wireless connection with the second household appliance (1).

6. Method according to claim 1, with which when the wireless connection between the first household appliance (11) and the second household appliance (1) is being established, an identifier assigned to the first household appliance (11) is input on the second household appliance (1) in order to establish the wireless connection between the first household appliance (11) and the second household appliance (1), or with which an input means of the second household appliance (1) is actuated when the wireless connection is being established between the first household appliance (11) and the second household appliance (1), whereupon within a predetermined period of time the second household appliance (1) establishes the wireless connection between the first household appliance (11) and the second household appliance (11).

7. Method according to one of claims 1 to 6, in which the first optical code (16) is a QR code and/or the second optical code (6) is a QR code.

8. Method according to one of claims 1 to 7, having displaying the first optical code (16) by means of a display device (17) of the first household appliance (11) and/or displaying the second optical code (6) by means of a display device (7) of the second household appliance (1).

9. Method according to one of claims 1 to 8, with which the household cooking appliance is embodied as a cooktop, preferably as a hob (1).

10. System having
- a first household appliance (11) comprising a first wireless interface (15) and a first electronic control device (14) coupled to the first wireless interface (15), which is configured to activate at least one function of the first household appliance (11),
- a second household appliance (1), which comprises a second wireless interface (5) and a second electronic control device (4) coupled to the second wireless interface (5), which is configured to activate at least one function of the second household appliance (1), wherein the first household appliance is embodied as an extractor hood (11) and the second household appliance is embodied as a household cooking appliance, so that the household cooking appliance can switch a ventilator and/or a lighting system of the extractor hood (11) on and off, and
- a mobile terminal (21), wherein the mobile terminal (21), the first household appliance (11) and the second household appliance (1) are adjusted to carrying out the method according to one of claims 1 to 9.

## Revendications

1. Procédé pour l'établissement d'une liaison sans fil entre deux appareils ménagers (1, 11), présentant les étapes opératoires suivantes dans lesquelles :
- au moyen d'un terminal mobile (21), on enregistre ou on reconnaît première image d'un premier code optique (16) qui est attribué à un premier appareil ménager (11) et comprend une première identification univoque attribuée au premier appareil ménager (11) ainsi qu'une adresse Internet, un site sur le Web et/ou un identifiant sous la forme d'un ensemble de données attribué au premier appareil ménager (11) ;
- au moyen du terminal mobile (21), on extrait par lecture la première identification univoque et on extrait par lecture l'adresse Internet, le site sur le Web ou l'identifiant sous la forme d'un ensemble de données à partir d'un ensemble de données d'images attribué à l'image ;
- on établit un contact automatique ou guidé par un menu avec l'adresse Internet au moyen du terminal mobile (21) dans le but de charger de manière automatique sur le terminal mobile (21) un programme informatique prévu pour l'exploitation au moins du premier appareil ménager (11), ou bien on établit un contact automatique ou guidé par un menu avec le site sur le Web dans le but de représenter une surface d'exploitation sur un dispositif d'affichage (23) du terminal mobile (21) au moyen duquel le programme informatique peut être téléchargé sur le terminal mobile (21), ou bien on établit un contact automatique ou guidé par un menu avec une banque de données attribuée à l'identifiant sous la forme d'un ensemble de données au moyen du terminal mobile (21) dans le but de charger le programme informatique sur le terminal mobile (21) ;
- on démarre ou on installe le programme informatique sur le terminal mobile (21) ou au moyen du terminal mobile et on établit une liaison sans fil entre le terminal mobile (21) et le premier appareil ménager (21) sur base de la première identification ; et
- au moyen du terminal mobile (21), on initie un établissement d'une liaison sans fil entre le premier appareil ménager (11) et un deuxième appareil ménager (1) d'une manière telle que les deux appareils ménagers (1, 11) ont la possibilité de communiquer sans fil l'un avec l'autre de manière directe ;
- dans lequel le premier appareil ménager est réalisé sous la forme d'une hotte aspirante (11) et le deuxième appareil ménager est réalisé sous la forme d'un appareil de cuisson d'une manière telle que l'appareil de cuisson peut mettre en circuit et hors circuit un ventilateur et/ou un éclairage de la hotte aspirante (11).

2. Procédé selon la revendication 1, présentant en outre les étapes opératoires suivantes dans lesquelles :
- on transmet sans fil une information via une deuxième identification univoque attribuée au deuxième appareil ménager (1) depuis le terminal mobile (21) jusqu'au premier appareil ménager (11) ; et
- on établit la liaison sans fil entre le premier appareil ménager (11) et le deuxième appareil ménager (1) en se basant sur la deuxième identification.

3. Procédé selon la revendication 2, présentant en outre les étapes opératoires suivantes dans lesquelles :
- au moyen du terminal mobile (21), on enregistre une deuxième image d'un deuxième code optique (6) qui est attribué au deuxième appareil ménager (1) et comprend la deuxième identification univoque attribuée au deuxième appareil ménager (1) ; et
- au moyen du terminal mobile (21), on extrait par lecture la deuxième identification.

4. Procédé selon la revendication 2, dans lequel la deuxième identification univoque est entrée dans le terminal mobile (21) au moyen d'un dispositif d'entrée (23) du terminal mobile (21).

5. Procédé selon la revendication 2, présentant en outre les étapes opératoires suivantes dans lesquelles :
- dans le cadre de l'établissement de la liaison sans fil entre le premier appareil ménager (11) et le deuxième appareil ménager (1), on détermine les appareils ménagers qui se trouvent à la portée du premier appareil ménager (11) et on transmet une information concernant les appareils ménagers déterminés au terminal mobile (21) ;
- on affiche les appareils ménagers déterminés sur un dispositif d'affichage (23) du terminal mobile (21) ;
- on sélectionne le deuxième appareil ménager (11) à partir des appareils ménagers affichés ; et
- sur base du deuxième appareil ménager sélectionné (11), on transmet une information depuis le terminal mobile (21) jusqu'au premier appareil ménager (11), à savoir que le deuxième appareil ménager (1) a été sélectionné, d'une manière telle que le premier appareil ménager (1) entame l'établissement de la liaison sans fil avec le deuxième appareil ménager (1).

6. Procédé selon la revendication 1, dans lequel au cours de l'établissement de la liaison sans fil entre le premier appareil ménager (11) et le deuxième appareil ménager (1), une identification attribuée au premier appareil ménager (11) est entrée dans le deuxième appareil ménager (1) afin de permettre l'établissement sans fil de la liaison entre le premier appareil ménager (11) et le deuxième appareil ménager (11), ou dans lequel, au cours de l'établissement de la liaison sans fil entre le premier appareil ménager (11) et le deuxième appareil ménager (1), un moyen d'entrée du deuxième appareil ménager (1) est activé ; à la suite de quoi le deuxième appareil ménager (1), au sein d'un laps de temps prédéfini, permet l'établissement sans fil de la liaison entre le premier appareil ménager (11) et le deuxième appareil ménager (11).

7. Procédé selon l'une quelconque des revendications 1 à 6, dans lequel le premier code optique (16) est un code QR et/ou le deuxième code optique (6) est un code QR.

8. Procédé selon l'une quelconque des revendications 1 à 7, présentant l'affichage du premier code optique (16) au moyen d'un dispositif d'affichage (17) du premier appareil ménager (11) et/ou l'affichage du deuxième code optique (6) au moyen d'un dispositif d'affichage (7) du deuxième appareil ménager (1).

9. Procédé selon l'une quelconque des revendications 1 à 8, dans lequel l'appareil de cuisson est réalisé sous la forme d'une plaque de cuisson, de préférence sous la forme d'une table de cuisson (1).

10. Système présentant :
- un premier appareil ménager (11) qui comprend une première interface sans fil (15) et un premier dispositif de commande électronique (14) couplé à la première interface sans fil (15), qui est conçu pour la commande d'au moins une fonction du premier appareil ménager (11) ;
- un deuxième appareil ménager (1) qui comprend une deuxième interface sans fil (5) et un deuxième dispositif de commande électronique (4) couplé à la deuxième interface sans fil (5), qui est conçu pour la commande d'au moins une fonction du deuxième appareil ménager (1) ; dans lequel le premier appareil ménager est réalisé sous la forme d'une hotte aspirante (11) et le deuxième appareil ménager est réalisé sous la forme d'un appareil de cuisson, d'une manière telle que l'appareil de cuisson peut mettre en circuit et hors circuit un ventilateur et/ou un éclairage de la hotte aspirante (11) ; et
- un terminal mobile (21) ; dans lequel le terminal mobile (21), le premier appareil ménager (11) et le deuxième appareil ménager (1) sont conçus pour la mise en oeuvre du procédé selon l'une quelconque des revendications 1 à 9.
